# EUROPÄISCHE PATENTSCHRIFT

(11) **EP 1 479 038 B1**
(45) Veröffentlichungstag und Bekanntmachung des Hinweises auf die Patenterteilung: **06.06.2012**
(21) Anmeldenummer: 03709659.1
(22) Anmeldetag: 27.02.2003
(51) Int. Cl.: G06F 3/033, G06F 3/038, G06K 7/08, G06K 7/10

(54) **BILDSCHIRMTAST-UND TRANSPONDERLESESTIFT**
TOUCHSCREEN-SENSITIVE AND TRANSPONDER READING STYLUS
STYLO D'EFFLEUREMENT D'ECRAN ET DE LECTURE POUR TRANSPONDEURS

(30) Priorität: 28.02.2002 DE 10208939; 26.03.2002 DE 10214050
(43) Veröffentlichungstag der Anmeldung: 24.11.2004
(73) Patentinhaber: Micro-Sensys GmbH, 99098 Erfurt (DE)
(72) Erfinder: JURISCH, Reinhard, 99438 Meckfeld bei Bad Berka (DE); PEITSCH, Peter, 99099 Erfurt (DE); JÄGER, Sylvo, 99098 Erfurt (DE)
(74) Vertreter: Pfeiffer, Rolf-Gerd
(86) Internationale Anmeldenummer: PCT/DE2003/000683
(87) Internationale Veröffentlichungsnummer: WO 2003/073368

(56) Entgegenhaltungen:
- US-A- 5 308 967
- US-A- 5 369 262
- US-A- 5 519 729
- US-A- 5 939 702

## Beschreibung

Die Erfindung begriff einen Bildschirmtast- und Transponderlesestift gemäß der Gattung der Patentansprüche.

Es sind allgemein bekannt, sogenannte Pens zum Arbeiten auf berührungssensitiven Bildschirmen (Touchscreens) von Computern oder von Personal Digital Assistent (PDAs, z.B. Stifte für PSION Serie 5) zu verwenden. Diese weisen in der Regel verrundet ausgeführte Tastspitzen auf, um die sehr empfindlichen Bildschirmoberflächen nicht zu verletzen. Weiterhin bekannt sind Laser-Pens zum Scannen von Barcodes oder zum automatischen Erkennen von Schriften.

Aus den US-A-5913629 und US-A-6050735 sind Schreibgeräte bekannt, die zur Benutzung als Taststifte an Bildschirmen geeignet sind.

Ebenso sind Transponder-Schreib- und Lesevorrichtungen zum Kommunizieren mit Transpondern über eine induktive Kopplung oder Radiofrequenzkopplung bekannt (vgl. Technische Angaben der Fa. MICRO-SENSYS GmbH zum RF-Identifikationssystem iID-2000). Aufgrund der bei diesen Vorrichtungen bislang eingesetzten Antennengestaltung sind sie jedoch nicht zur Benutzung auf Touchscreens geeignet.

In DE 296 10 191 U1 ist ein Handgerät beschrieben, welches lediglich die bauliche Vereinigung zweier unterschiedlicher und jeweils völlig selbstständig arbeitender Geräte, nämlich eines in einer Spitze untergebrachten Barcodelesers und eines separat angeordneten Lesegerätes für RF-ID-Transponder in einem Gehäuse umfasst. Der dort vorgesehene Transponder-Schreib-/Lesekopf weist ein erhebliches Volumen auf, was auch erforderlich ist, um mit einem hinreichend guten Kopplungsfaktor überhaupt Energie auf den dort vorgesehenen Transponder übertragen zu können. Diese Ausführung lässt sich aufgrund ihrer konstruktiv bedingten Ausbildung nicht miniaturisieren und ist nicht zur Verwendung, vergleichbar einem touch-pen, geeignet.

Vorstehende Lösung erfährt einzig bzgl. des Barcode-Lesers durch US 5,939,702 A eine elegantere Ausführung, bei der in einer Stiftspitze zusätzlich zu einer Schreibmine ein Barcode-Leser vorgesehen ist.

In US 5,519,729 A wird ausschließlich die Art der Kommunikation zwischen einem Transponder und einem Interface beschrieben, die die Grundlagen eines wie auch immer ausgestalteten RF-ID-Systems betreffen. Einen Hinweis zur Ausbildung vorliegender Erfindung, vermag diese Schrift in keiner Weise zu geben.

US 5,369,262 A beschreibt ebenfalls einen rein optischen Lesekopf zur Eingabe von Positionsdaten in ein elektronisches Digitalisierungstableau und gibt somit keinen Hinweis auf vorliegende Erfindung.

DE 38 07 567 A1 beschreibt eine Lösung, die nicht zur Kommunikation mit einem Transponder vorgesehen ist, sondern eine Lösung zur Bestimmung der Koordinaten bzw. Position eines Stiftes auf einem Tableau, wobei die eigentliche Readerfunktion im Tableau beinhaltet ist.

In US 5,576,502 A ist ein gegenüber einer Spule beweglicher Kern vorgesehen, dessen Lageveränderung mess- und registrierbare Induktionen hervorruft. Mit einer Kommunikation mit einem Transponder hat diese Lösung nichts gemein.

Der Erfindung liegt die Aufgabe zugrunde, einen Bildschirmtaststift für Touchscreens anzugeben, dessen Energiebedarf gering ist und der zugleich oder nacheinander eine Kommunikation mit Transpondern sowie mit Computergeräten oder Telefonen ermöglicht.

Die Aufgabe wird durch die kennzeichnenden Merkmale des ersten Patentanspruchs gelöst. Vorteilhafte Ausgestaltungen sind von den nachgeordneten Ansprüchen erfasst. Dabei kann zwischen dem Stift mit seiner optischen Sensorik und dem Computer und/oder der Steuereinheit und/oder dem Transponder sowohl eine Leitungsverbindung als auch eine drahtlose Verbindung unidirektional oder bidirektional bestehen. Die Antenne zur RF-ID (Radio Frequency Identification)-Elektronik ist vorteilhaft, jedoch nicht notwendig als Spule gestaltet. Diese mindestens eine Antenne ist im Sinne eines kompakt ausgestalteten und einfach handhabbaren Bildschirmtast- und Transponderlesestiftes vorteilhaft im Spitzenbereich angeordnet, so dass das elektromagnetische Feld günstigerweise am verjüngten Ende des Spitzenbereichs aus dem Handteil austritt. In diesem Fall ist das Handteil in seinem vorzugsweise zylindrischen Bereich aus einem geeigneten Metall und in seinem Spitzenbereich aus einem geeigneten Kunststoff hergestellt. Auch ist der Stift nicht an eine bestimmte Form gebunden; falls es ergonomisch oder trendmäßig günstig erscheint, könnte der Stift zumindest teilweise als Kugel, Kegel, Quader oder Pyramide gestaltet sein.

Die Vorteile vorliegender Erfindung bestehen in einer kleinen und kompakte Bauform, ähnlich der eines Kugelschreibers, die einen universellen Einsatz ermöglicht. Bei Anwendung von PDAs muß der Anwender nicht zwei separate Geräte, wie nach dem Stand der Technik üblich, wie Touchpen und Readerpen, benutzen. Außerdem ermöglicht die Erfindung die Schaffung eines energiesparenden Stiftes, was insbesondere bei mit Batterien ausgestatteten Vorrichtungen bedeutungsvoll ist.

Die Erfindung wird nachstehend an Hand der schematischen Zeichnung näher erläutert werden. Es zeigen:
- Fig. 1: einen erfindungsgemäßen Bildschirmtast- und Transponderlesestift a) in Ansicht und b) im Längsschnitt,
- Fig. 2: eine erste Ausführungsmöglichkeit der Stiftspitze nebst Gestaltung einer ersten Schreib-Lese-Antenne,
- Fig. 3: eine zweite Ausführungsmöglichkeit der Stiftspitze nebst Gestaltung einer zweiten Schreib-Lese-Antenne, a) im Schnitt, b) in Ansicht,
- Fig. 4: eine dritte Ausführungsmöglichkeit der Stiftspitze nebst Gestaltung einer dritten Schreib-Lese-Antenne, a) im Schnitt, b) in Ansicht von unten,
- Fig. 5: eine vierte Ausführungsmöglichkeit der Stiftspitze im Schnitt,
- Fig. 6 einen: detaillierten Aufbau nach Fig. 5 in einem Axialschnitt,
- Fig. 7: eine fünfte detaillierte Ausführungsmöglichkeit der Stiftspitze als Axialschnitt,
- Fig. 8: eine sechste Ausführungsmöglichkeit der Stiftspitze im Axialschnitt,
- Fig. 9: eine siebente Ausführungsmöglichkeit der Tastspitze im Axialschnitt,
- Fig. 10: einen Stift im Zusammenwirken mit einem Computerbildschirm und Transponder,
- Fig. 11: alle wesentlichen, im Taststift untergebrachten Komponenten in einem Blockschaltbild und
- Fig. 12: ein Funktionsschema für den Gebrauch eines erfindungsgemäßen Stiftes.

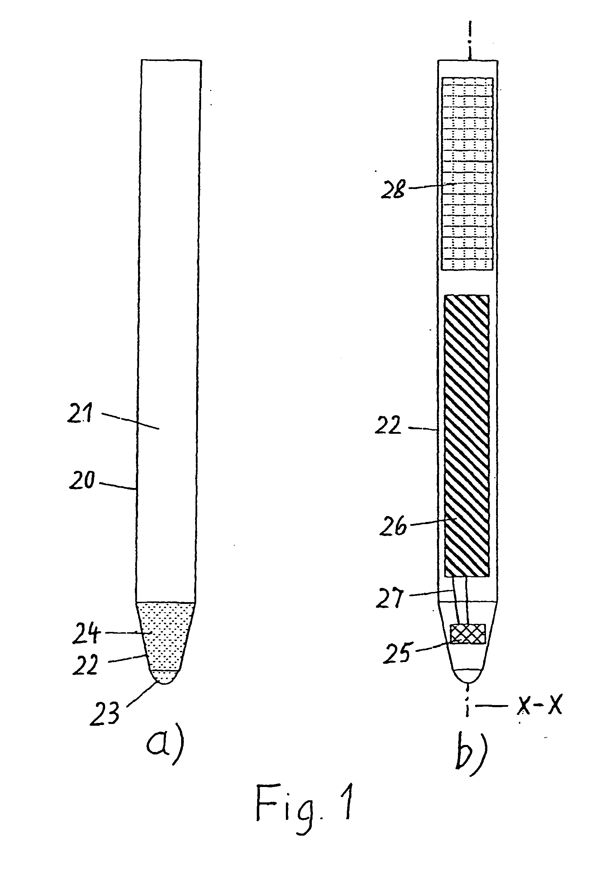

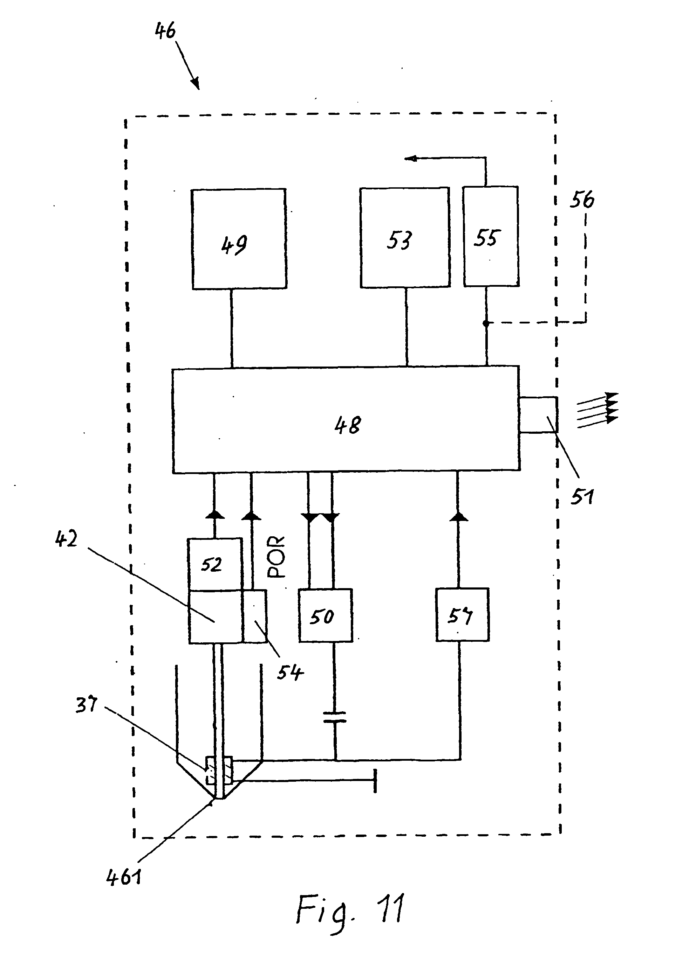

In Fig. 1 besteht ein erfindungsgemäßer Bildschirmtast- und Transponderlesestift 20 aus dem Handteil 21, bei dem sich an einen vorzugsweise zylindrischen Bereich ein Spitzenbereich 22 anschließt, der sich insbesondere konisch oder pyramidal zu einer gerundeten Tastspitze 23 verjüngt. Der Spitzenbereich 22 ist so ausgeführt, dass in seinem speziell geformten Bereich 24 unterschiedliche gestaltete Antennen 25 untergebracht werden können. Die Tastspitze 23 dient zum Berühren von hier nicht dargestellten Touchscreens. Beide Bereiche 23 und 24 können auch ineinander übergehen. Die Antennen 25 werden vorzugsweise durch elektrische Spulen gebildet, die ein magnetisches Feld abstrahlen. Des weiteren enthält der Stift 20 eine Schreib-/Leseelektronik 26, die zu Fig. 11 beschrieben wird, die mit der Antenne 25 über Spulendrähte 27 verbunden ist. Ebenso enthält der Stift 20 mögliche Zusatzelemente 28, die Batterien, Anschlussstecker oder Kabel, Datenfunkbausteine usw., die zumindest teilweise bekannt sind.

Da die spezielle Ausführung und Geometrie der Spitze und Antenne wichtig ist, wird im Folgenden zunächst auf diese eingegangen.

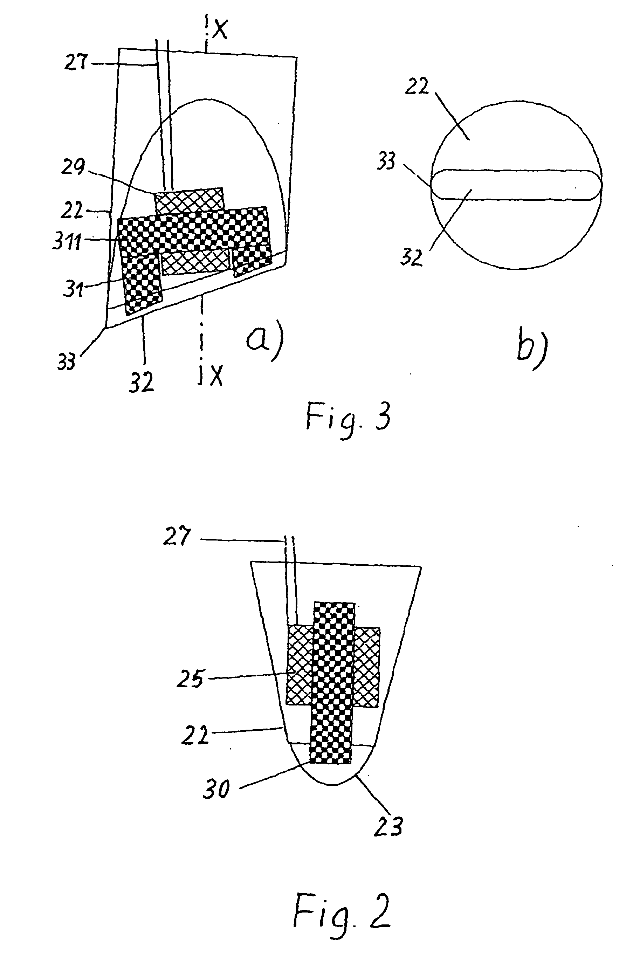

Fig. 2 zeigt eine axialsymmetrische Ausführung des Spitzenbereichs 22 nebst Gestaltung einer als Spule 29 ausgebildeten Schreib-Lese-Antenne, die über Drähte 27 mit der Elektronik 26 verbunden ist. Eingesetzt wird in diesem Beispiel ein ferromagnetischer Kern 30, der stabförmig ausgebildet ist, um den eine Spule 29 gewickelt ist, wobei der Spitzenbereich 22 allseitig zentrisch verjüngt zulaufend und als Tastspitze 23 verrundet ausgebildet ist.

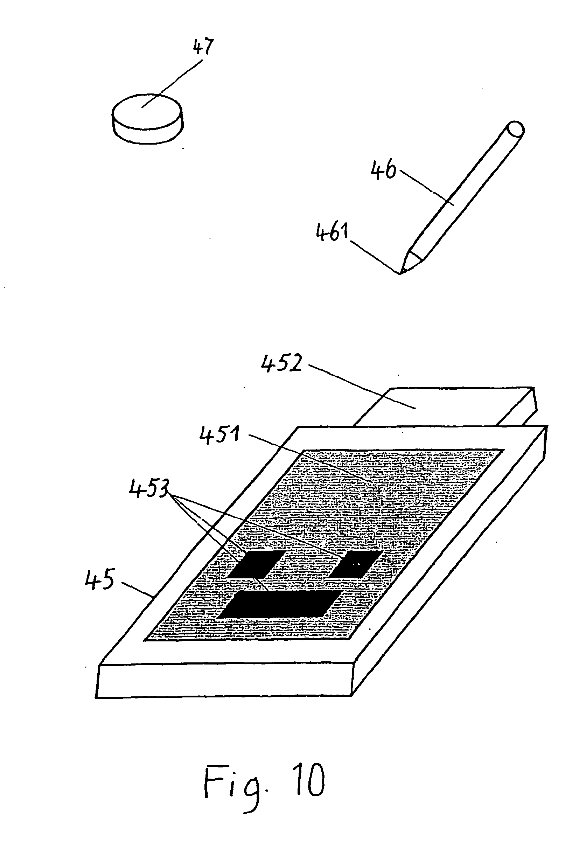

Bei ausreichender Kopplung zwischen Antenne 25 und einem in Fig. 10 angegebenen Transponder kann der Kern 30 im Einzelfall u.U. entfallen. Das gilt auch für die nachfolgenden Beispiele, stellt jedoch keine bevorzugte Ausführung dar.

Fig. 3 zeigt eine zweite Ausführungsmöglichkeit eines Spitzenbereichs 22 nebst Gestaltung einer zweiten Schreib-Lese-Antenne 29 mit einem U-förmigen Kern 31, die insbesondere für Glastransponder und Transponder mit einem Schalenkern geeignet ist. Dabei weist die Tastspitze eine längserstreckte abgerundete Kante 32 auf, wie die ovale Gestalt der in Fig. 3b dargestellte Frontansicht des Spitzenbereichs 22 zeigt. Bei dem ferromagnetischen, U-förmig ausgebildeten Kern 31 ist die Spule 29 um den die beiden parallel verlaufenden Schenkel und diese senkrecht verbindenden Kernbereich 311 gewickelt, wobei der Spitzenbereich 22 beidseitig in einer Dimension konisch verjüngt zulaufend ausgebildet und die abgerundete Kante 32 schräg angeordnet ist. Die eigentliche Tastspitze des Spitzenbereichs 22 befindet sich bei 33, wo das Oval 32 der abgerundeten Kante auch einen kleinsten Krümmungsradius hat.

Wenn die Kante 32, abweichend zu Fig. 3, rechtwinklig zur geometrischen Achse X-X des Stiftes 20 bzw. des Spitzenbereichs 22 gerichtet ist, hat der ovale Bereich der abgerundeten Kante 32 zwei gleiche Bereiche mit dem kleinstem Krümmungsradius.

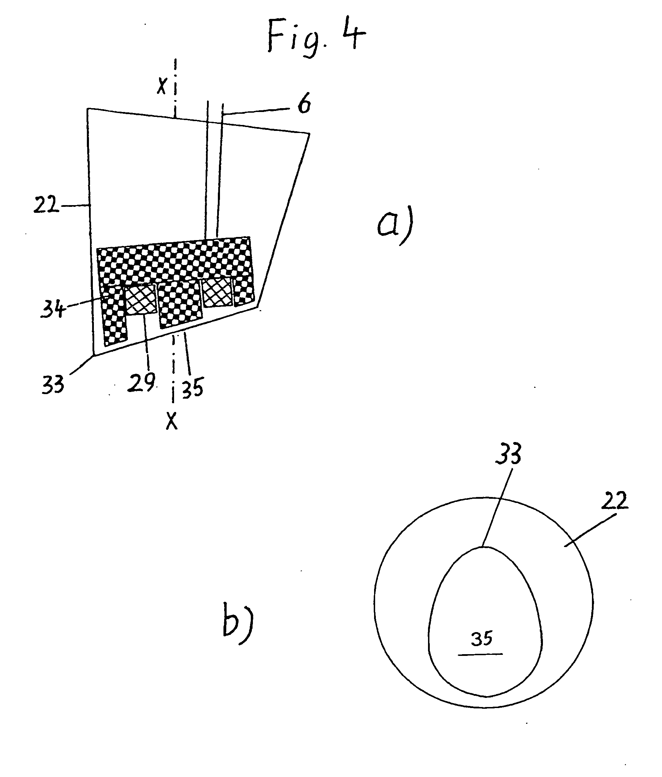

Nach Figur 4 befindet sich im Spitzenbereich 22 ein Schalenkern 34, in den die Spule 29 eingelegt ist, wobei der Spitzenbereich 22 azentrisch zur geometrischen Achse X-X verjüngt zulaufend und in der Tastspitze 23 mit einer Abschrägung versehen ist. Damit ergibt sich eine elliptische Schrägfläche 35. Der Spitzenbereich bietet somit Raum für den asymmetrischen Schalenkern 34 und erreicht eine punktuelle Geometrie. Die eigentliche Tastspitze befindet sich bei 33, wo die Begrenzungslinie der Schrägfläche 35 ihren kleinsten Krümmungsradius hat. Die Tastspitzen in Fig. 3 und 4 werden beim Tasten auf Touchscreens optimal in senkrechter Lage und bei Verwendung mit Transpondern in einer Neigung von 10° bis 45° zu einem Gegenstand benutzt, in oder auf dem sich der Transponder befindet.

Bei allen vorstehend beschriebenen Ausführungsformen soll der maximale Durchmesser des Spitzenbereichs 22 am Handteil 20 nicht größer sein als ca. 15 mm. Auch bei den Ausführungen nach den Figuren 3 und 4 kann die Abschrägung 32 bzw. 35 im Bereich 33 des kleinsten Krümmungsradius verrundet ausgeführt sein.

Die Tastspitzenform ist in jedem der Ausführungsbeispiele so gestaltet, dass die Größe der Spitze möglichst kleine Tastfelder auf einem Touchscreen eindeutig berühren lässt und einen ausreichend großen Abstand zwischen Transponder und Antenne gewährleistet. Die Berührungsfläche soll kleiner als 1 mm² sein, um den Sichtbereich des Benutzers bei Verwendung als Taststift oder als Transponderlesestift für kleine Transponder minimal einzuschränken. Eine ergonomische Handhabung des Stiftes bei möglichst großem Kommunikationsabstand zwischen Stift und Transponder ist gewährleistet. Der Spitzenbereich ist vorzugsweise aus einem Kunststoff hergestellt und vor der Tastspitze ist kein den Magnetfluss hemmendes Medium vorgesehen, wodurch keine magnetische Abschirmung und keine wesentliche Magnetfelddämpfung stattfindet.

Zur Aktivierung seiner Schreib-Lese-Elektronik und im Bedarfsfall zur Datenübertragung ist der erfindungsgemäße Bildschirmtast- und Transponderlesestift mit einer optoelektrischen Sensorik versehen.

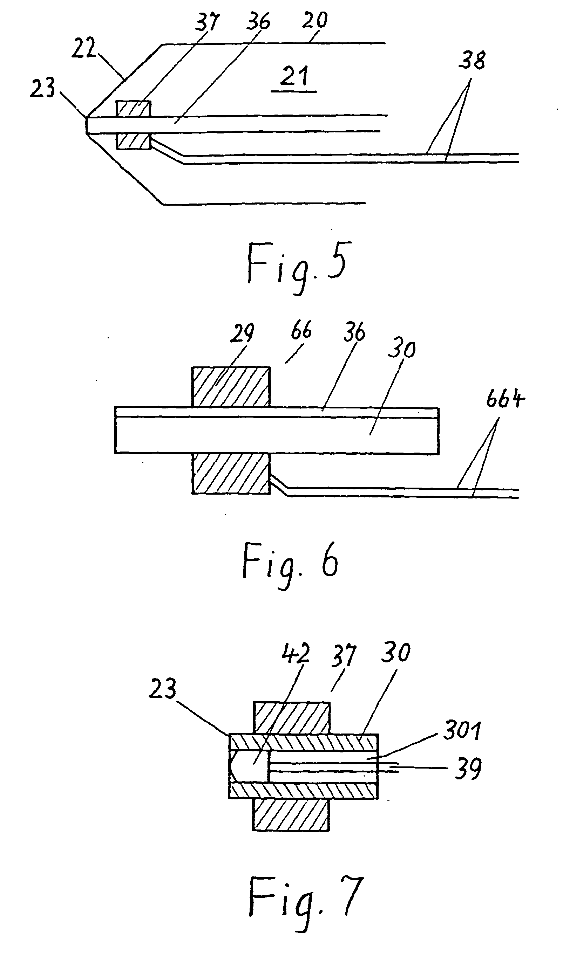

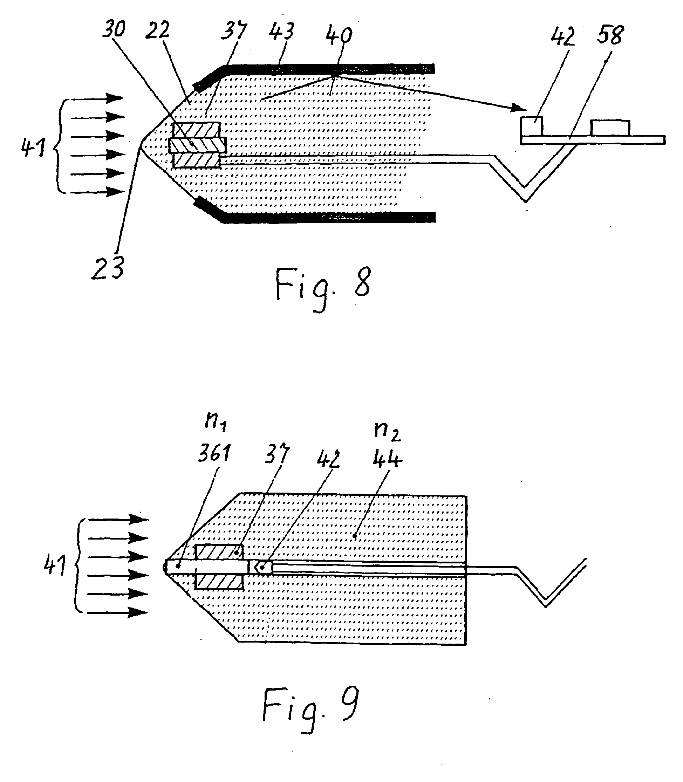

In Fig. 5 ist wieder ein Stift 20 mit einem Handteil 21 und einem Spitzenbereich 22 vorgesehen, bei dem ein sich bis zur Tastspitze 23 erstreckender Lichtleiter in Form eines Lichtleitkabels 36 die optische Verbindung zu einem optischen Sensor (Lichtsensor, siehe Fig. 8) darstellt, der Teil einer bspw. in Fig. 11 dargestellten Schreib-Lese-Elektronik ist. Dabei kann dem Lichtleitkabel 36 eine nicht dargestellte Linse zur Lichtsammlung bzw. Abbildung vorgeordnet sein. Um das Lichtleitkabel ist im Bereich der Spitze 22 eine Antenne 37 mit elektrischen Anschlüssen 38 vorgesehen, die zu einer nicht dargestellten, im Stift 20 befindlichen Leiterplatte führen. Der Vorteil einer optoelektronischen Aktivierung besteht darin, dass ohne bzw. sehr wenig Energieaufwand eine Einschaltfunktion der Energie verbrauchenden Elektronik erfolgen kann.

In Fig. 6 ist eine als Spule 29 ausgebildete Antenne auf einen Ferritkern 30 gewickelt, auf den auch ein Lichtleiter 36 gelegt ist. Die übrigen Teile des Spitzenbereichs sind zur Vereinfachung der Darstellung weggelassen. Der Lichtleiter 36 kann auch in eine entsprechende Ausnehmung oder Nut am Ferritkern eingelegt sein.

In Fig. 7 ist ein von einer Antenne 37 umwickelter Ferritkern 30, der eine zylindrische Ausnehmung bzw. eine Bohrung 301 aufweist, in der sich direkt in der Tastspitze 23, geschützt gegen beschädigende Einflüsse, ein Lichtsensor (Fotoelement) 42 befindet, von der eine elektrische Signalübertragungsleitung 39 zur nicht dargestellten Schreib-Lese-Elektronik im nicht dargestellten Stift 20 führt.

Gemäß Fig.8 kann ein von einer Antennenspule 37 umwickelter Ferritkern 30 auch in eine zumindest den Spitzenbereich 22 ausfüllende, ausgehärtete und Vergussmasse 40 eingebettet sein. Diese Vergussmasse 40 ist für optische Strahlen 41 durchlässig und für magnetische Felder nicht hinderlich. Sie leitet die in den Spitzenbereich 22 eintretenden Lichtstrahlen 41 nach Reflexion an einem Belag 43 einem im Inneren eines Stiftes 20 befindlichen Lichtsensor 42 zu, der mit der Schreib-Lese-Elektronik auf einer Leiterplatte 58 angebracht sein kann. Der lichtreflektierende Belag 43 befindet sich zwischen der nicht dargestellten Stiftinnenwandung und der Vergussmasse 40 und umfasst diese Vergussmasse derart, dass von ihr in Richtung der Stift- oder Tastspitze 23 nur maximal 90% der Antenne 37 überdeckt werden und damit eine zu starke Dämpfung des von ihr ausgehenden elektromagnetischen Feldes vermieden wird.

In Fig. 9 ist ähnlich wie in Fig. 5 ein Lichtleiter 361 von einer Antenne 37 umschlossen. Dabei handelt es sich um kurzes Stück Lichtleiter mit einem Brechungsindex n₁, dem ein Fotoempfänger 42 nachgeordnet ist. Lichtleiterstück 361, Antenne 37 und Fotoempfänger 42 werden von einem äußeren lichtleitenden Körper 44 umschlossen, der durch Verguss hergestellt worden sein kann und einen Brechungsindex n₂ aufweist. Für die Brechungsindices gilt die Beziehung n₁<n₂, damit das in dem Lichtleiter 361 geführte Licht 41 nicht aus dem Lichtleiter 361 austreten kann. Der Fotoempfänger 42 ist über eine Signalübertragungsleitung 39 mit einer nicht dargestellten elektronischen Schaltung verbunden.

In Fig. 10 sind ein Computer 45 mit einem Bildschirm 451 und einem HF-Empfänger 452, ein Bildschirmtast- und Transponderlesestift 46 mit einer Spitze 461 (Tastspitze) und einem Anschlusskabel bzw. einer Funkantenne 462 sowie ein Transponder 47 dargestellt. Auf dem Bildschirm 451 sind Schaltflächen 453 vorgesehen, die moduliertes Licht aussenden oder reflektieren. Mit der Spitze 461 wird der Bildschirm 451 einschließlich der Schaltflächen 453 angetastet, wobei ein in dem Taststift 46 bereits mehrfach genannter Fotoempfänger oder optischen Sensor zur Detektion des von den Schaltflächen 453 ausgesandten modulierten Lichtes dient.

In Fig. 11 ist ein Blockschaltbild eines Bildschirmtast- und Transponderlesestiftes 46 dargestellt. Der Computer 45 bildet auf seinem Bildschirm bspw. drei Schaltflächen (Funktionstasten) 453 ab, die nach Berühren durch die Tastspitze 461 des erfindungsgemäßen Stiftes 46 mit seinem integrierten Lichtempfänger 42 empfangen und demoduliert und an einen im Stift 46 befindlichen Controler 48 weitergeleitet werden, der eine Plausibilitätsprüfung durchführt und bei erfolgreicher Übertragung die Steuer- und Dateninformation in einem Eingangs- und Datenspeicher 49 ablegt und ggf. eine Datenübertragung über eine RF-ID-Sende- und Modulatorstufe 50, wie bei Transponderanwendungen üblich, oder ggf. eine Datenübertragung über einen Kabel- oder Funkkanal auslöst. Das von der RF-ID-Sende- und Modulatorstufe 50 ausgesandte Signal wird von einem HF-Empfänger 452 (Fig. 10), der am Computer 45 vorgesehen ist, empfangen und als Bestätigung, bspw. durch Öffnen eines Ergebnisfensters des Computers 45 oder durch bloßes Anzeigen auf dem Bildschirm 451 verarbeitet.

In der Zwischenzeit kann der Stift 46 die im Eingangs- und Datenspeicher 49 empfangenen Befehle (Steuerinformationen) entsprechend seiner Programmierung abarbeiten, d.h. er kann einen Status über seinen Betriebszustand an einer optionalen Anzeige 51 in Form einer Leuchtdiode und insbesondere die ihm übertragenen RF-ID-Funktionen über die Sende- und Modulatorstufe 50, den Lichtempfänger 42, den Demodulator 52 und eine Antennenspule 37 an üblichen RF-ID-Systemen kommunizieren. Dazu ist der Stift 46 in den Kommunikationsbereich eines Transponders 47 zu bewegen.

Die Baugruppe RF-ID Empfänger und Demodulator 50 besteht aus einer Anordnung von Bauelementen, die dem Empfang der durch den Transponder 47 ausgesandten Daten und deren Umwandlung in für den Controller 48 verständliche Signale dienen.

Im Rahmen der Erfindung ist es wichtig, dass die über die RF-ID-Sende-und Modulatorstufe 50 gefahrenen Übertragungsprotokolle und/oder Modulationsarten bei der Signalübertragung zum Transponder 47 und HF-Empfänger 452 am Computer 45 unterschiedlich sind, so dass eine eindeutige Funktion von Transponder 47 und Computer 45 gewährleistet ist.

Ist die Kommunikation mit dem Transponder 47 abgeschlossen, d.h. der im Eingangs- und Datenspeicher 49 abgelegte Befehl oder Befehlssatz (mehrere seriell abzuarbeitende Kommandos) wurden erfolgreich bearbeitet oder ein Zeitlimit wurde überschritten oder Kommunikationsprobleme traten auf, sendet der durch den Controler 48 gesteuerte Stift 46 die Daten eines Ausgangsspeichers 53 und diverse Statusinformationen über die RF-ID-Sende- und Modulatorstufe 50 zum HF-Empfänger 452 oder über einen Funkkanal 55 oder über einen Kabelkanal 56 an den Computer 45. Eine Rückübertragung zum Computer 45 kann auch über die für die Transponderkommunikation benötigte identische oder parametrisierbare Anordnung 50, 37 erfolgen. Damit wird die Verwendung eines separaten Funk- bzw. Kabelkanals überflüssig. Diese Übertragung kann auch unter Zuhilfenahme von Oberwellen geschehen.

Die Ergebnisdaten aus der Transponderkommunikation werden in dem Ausgangsspeicher 53 zwischengespeichert.

Alle weiteren Abläufe werden wie bei allgemein bekannten RF-ID-Systemen dann im Computer 45 gesteuert. Beispielsweise werden die Ausgangsdaten des Speichers 53, die auf die Transponderdaten zurückgehen, angezeigt und neue Menüfenster auf dem Computerbildschirm 451 geöffnet. Diese Menüfenster können dann wiederum Schaltflächen 453, wie oben beschrieben, enthalten.

Im Fall einer fehlerhaften Transponderkommunikation oder von Übertragungsfehlern zwischen der RF-ID Sende- und Modulatorstufe 50 und dem HF-Empfänger 452 werden Fehlermeldungen auf dem Computerbildschirm 451 und entsprechende Änderungen im Programmablauf ausgelöst.

Wenn im Stift 46 ein Befehlssatz abgearbeitet wurde, wird dieser entweder automatisch, nach einer festgelegten Zeit, oder aktiv über einen speziellen Befehlscode über ein moduliertes Tastenfeld 453 und den Lichtempfänger 42 in einen Sparmodus geschaltet. Dabei werden alle Funktionen des Stiftes 46 bis auf einen Power-On-Reset-(POR)-Eingang 54 des Controlers 48 und den Lichtempfänger 42 ausgeschaltet. Der Lichtempfänger 42 kann in diesem Modus ohne eigene Energie arbeiten und er ist so eingestellt, dass sein Schwellwert erst durch die Lichteinwirkung der Schaltflächen 453 auf den Ausgang (POR) aktiviert, (meist logisch H) geschaltet wird. Damit wird der Controler 48 aktiviert (POR) und schaltet die Gesamtfunktionen ein, insbesondere den aktiven Teil des Lichtempfängers 42 und den Demodulator 52.

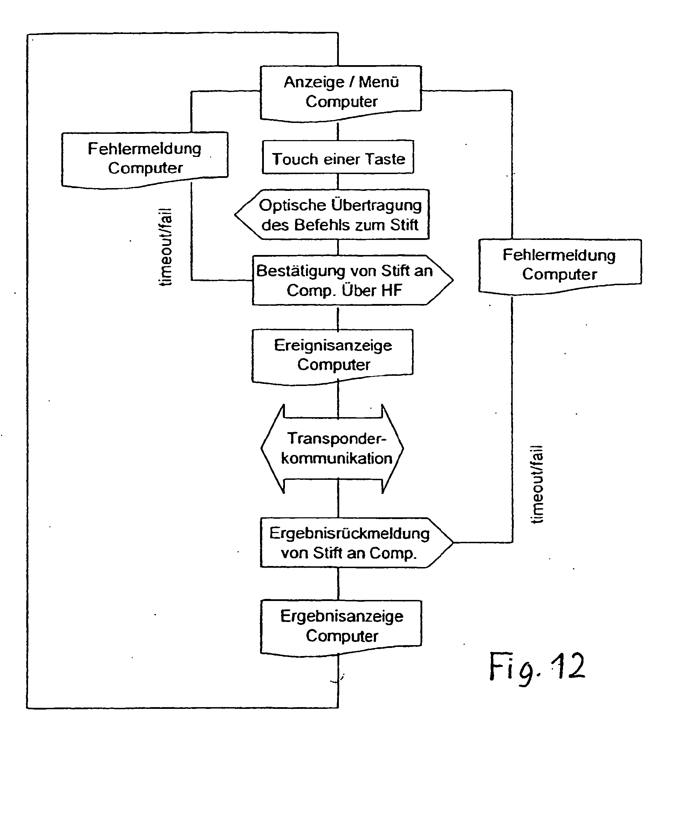

Alle vorstehend genannten wesentlichen Baugruppen und Prozeßabläufe sind in Fig. 12 zusammenfassend dargestellt. Dabei ist ein logisch vorgegebener Ablauf eingehalten, der mit einer definierten Anzeige auf dem Computerbildschirm 451 in Form von Funktionstasten 453 beginnt und dem die Aktivierung des Stiftes 46 durch seine Berührung der Tasten 453 folgt. Insbesondere kann während der Tastenberührung eine Übertragung von Steuerinformationen und/oder Daten zum Stift 46 erfolgen. Das Berühren des Stiftes 46 mit dem Bildschirm 451 führt zu einer Einschaltung bzw. Aktivierung der Energie verbrauchenden Elektronik des Stiftes. Um eine Kontrollfunktion für diesen Vorgang zu haben, kann eine Bestätigung mit Hilfe der Leuchtdiode 51 erfolgen oder ein Signal über einen der Funkkanäle 55 oder 50, 37 bzw. über den Kabelkanal 56 an den HF-Empfänger 452 des Computers 45 gegeben werden. Mit der Aktivierung des Stiftes 46 wird die Kommunikation zum Transponder 47 eingeschaltet. Im Ergebnis dieser Kommunikation mit dem Transponder 47 setzt der Stift 46 Rückmeldungen über die genannten Funksysteme oder Kabelverbindung ab. Auch die Leuchtdiode kann zu Bestätigungsmeldungen benutzt werden.

Die vom Computer 45 empfangenen Signale werden als Ergebnisse auf dem Bildschirm angezeigt und können in besonderen Fällen zur Bildung neuer Tastfelder führen. Damit kann der Erfassungszyklus von neuem beginnen oder beendet werden. Die Deaktivierung des Stiftes 46 erfolgt günstiger Weise nach angemessener Zeit automatisch. Falls interne Abläufe im Erfassungszyklus nicht ordnungsgemäß abgeschlossen werden, kann über einen der Funkkanäle oder das Kabel Fehlermeldungen an den Computer 45 geschickt werden die ebenfalls zur Deaktivierung des Stiftes 46 führen.

### Bezugszeichenliste

- 20, 46: Bildschirmtast- und Transponderlesestift
- 21: Handteil
- 22: Spitzenbereich
- 23: Tastspitze
- 24: speziell geformter Bereich
- 25, 29, 37: Antenne, Spule
- 26: Schreib-Lese-Elektronik
- 27: Spulendrähte
- 28: Zusatzelemente
- 30: ferromagnetischer Kern, Ferritkern
- 31: U-förmiger Kern
- 32: abgerundete Kante
- 33: eigentliche Tastspitze
- 34: Schalenkern
- 35: Schrägfläche
- 36, 361: Lichtleiter, Lichtleitkabel
- 38: elektrische Anschlüsse
- 39: elektrische Signalübertragungsleitung
- 40: Vergussmasse
- 41: Lichtstrahlen
- 42: Lichtsensor, Fotoempfänger
- 43: Belag
- 44: Lichtleitender Körper
- 45: Computer
- 47: Transponder
- 48: Controler
- 49: Eingangs-und Datenspeicher
- 50: Sende-und Modulationsstufe
- 51: optionale Anzeige
- 52: Demodulator
- 53: Ausgangsspeicher
- 54: Power-on-Reset-Eingang
- 55: Funkkanal, Funksystem
- 56: Kabelkanal
- 57: Empfänger für RF-ID-Kommunikation
- 58: Leiterplatte
- 301: Ausnehmung, Bohrung
- 311: Kernbereich
- 451: Bildschirm
- 452: HF-Empfänger
- 453: Schaltflächen
- 461: Tastspitze
- 462: Anschlusskabel bzw. Funkantenne
- X-X: Achse

## Patentansprüche

1. Bildschirmtast- und Transponderlesestift (20) zum Abtasten von Bildschirmen, mit einem Handteil (21), in dein eine RF-ID-Schreib-/ Leseelektronik (26) und optional mögliche Zusatzelemente (28) angeordnet sind und das eine Tastspitze (23) und eine Antenne (25) aufweist, **dadurch gekennzeichnet, dass** dem Handteil (21) ein in mindestens in einer Richtung zur Tastspitze (23) sich verjüngenden Spitzenbereich (22) gegeben ist, in dem die als Spule (25, 29, 37) ausgebildete Antenne derart vorgesehen ist, dass -bei deren Beaufschlagung mit elektrischer Energie- das von ihr ausgehende elektromagnetische Feld am verjüngten Ende des Spitzenbereichs (23) austritt, und dass das Handteil (21) so ausgebildet ist, dass es zumindest in der Nähe der Antenne (25, 29, 37) frei von einer elektromagnetischen Abschirmung oder sonstigen, eine Dämpfung bewirkenden Mitteln ist und der Spitzenbereich so ausgebildet ist, dass er eine exakte visuell verfolgbare Positionierung auf dem Bildschirm ermöglicht.

2. Bildschirmtast- und Transponderlesestift nach Anspruch 1, **dadurch gekennzeichnet, dass** der elektrischen Spule (25, 29, 37) ein die elektromagnetische Abstrahlwirkung fokussierender ferromagnetischer Kern zugeordnet ist.

3. Bildschirmtast- und Transponderlesestift nach Anspruch 2, **dadurch gekennzeichnet, dass** der ferromagnetische Kern (30) stabförmig ausgebildet und von der Spule (25) umgewickelt ist, wobei der Spitzenbereich (23) zur Tastspitze allseitig zentrisch verjüngt zulaufend und verrundet ausgebildet ist.

4. Bildschirmtast- und Transponderlesestift nach Anspruch 2, **dadurch gekennzeichnet, dass** der ferromagnetische Kern (31) U-förmig ausgebildet und die Spule (29) um den die beiden U-Schenkel verbindenden Kernbereich gewickelt ist, wobei der Spitzenbereich (32) beidseitig in einer Dimension konisch verjüngt zulaufend ausgebildet ist und das Tastende eine Abschrägung aufweist.

5. Bildschirmtast- und Transponderlesestift nach Anspruch 2, **dadurch gekennzeichnet, dass** der ferromagnetische Kern als die Spule enthaltender Schalenkern (34) ausgebildet ist, in den die Spule (29) eingelegt ist, wobei der Spitzenbereich sich azentrisch verjüngend ausgebildet und am Tastende mit einer Abschrägung (33) versehen ist.

6. Bildschirmtast- und Transponderlesestift nach Anspruch 4 oder 5, **dadurch gekennzeichnet, dass** die Abschrägung durch eine geschlossene Kurve begrenzt wird, die im Bereich ihres kleinsten Krümmungsradius verrundet ausgeführt ist.

7. Bildschirmtast- und Transponderlesestift nach einem der vorstehenden Ansprüche, **dadurch gekennzeichnet, dass** die Antenne im Spitzenbereich vermittels eines ausgehärteten, elektromagnetisch wenig dämpfenden Vergussmittels (40) fixiert ist.

8. Bildschirmtast- und Transponderlesestift nach einem der vorstehenden Ansprüche, **dadurch gekennzeichnet, dass** die durch die Tastspitze gebildete Berührungsfläche für die Verwendung als Bildschirmtaststift kleiner als 1 mm² ist.

9. Bildschirmtast- und Transponderlesestift nach Anspruch 1, **dadurch gekennzeichnet, dass** sich im Handteil zusätzlich ein Lichtsensor (42) befindet.

10. Bildschirmtast- und Transponderlesestift nach Anspruch 1 und 9, **dadurch gekennzeichnet, dass** ein Lichtleiter vom Tastende durch die als Spule ausgebildete RF-ID-Antenne zu einem Lichtsensor im Handteil geführt ist.

11. Bildschirmtast- und Transponderlesestift gemäß Anspruch 9, **dadurch gekennzeichnet, dass** der Lichtsensor sich an der Tastspitze befindet.

12. Bildschirmtast- und Transponderlesestift nach Anspruch 10, **dadurch gekennzeichnet, dass** der Lichtleiter durch den ferromagnetischen Kern hindurch geführt ist.

13. Bildschirmtast- und Transponderlesestift nach Anspruch 9, **dadurch gekennzeichnet, dass** der Lichtsensor im Spitzenbereich im ferromagnetischen Kern angeordnet ist.

14. Bildschirmtast- und Transponderlesestift nach Anspruch 7, **dadurch gekennzeichnet, dass** das Vergussmittel ein lichtleitendes Medium ist, bei dem sich an seiner Grenzfläche zum Stiftgehäuse eine Reflexionsschicht befindet und das am Tastende eintretendes Licht zu einem auf einer Lichtleiterplatte befindlichen Lichtsensor leitet.

15. Bildschirmtast- und Transponderlesestift nach Anspruch 9, **dadurch gekennzeichnet, dass** der Lichtsensor Teil einer elektronischen Schaltung ist, die außerdem einen der Signalverknüpfung und Steuerung dienenden Controler, einen Power-On-Reset-Eingang für den Controler, eine Verbindung des Controlers mit Lichtsensor über einen Demodulator, einen Eingangsspeicher und einen Ausgangsspeicher, sowie eine RF-ID-Sende- und Modulatorstufe enthält.

16. Bildschirmtast- und Transponderlesestift nach Anspruch 9, **dadurch gekennzeichnet, dass** er mit einem Transponder und einem Computer zusammenwirkt, wobei der Computer mit Hilfe von Lichtsignalen, die von auf seinem Bildschirm erscheinenden Tastfeldern ausgehen, den Stift aktiviert.

17. Bildschirmtast- und Transponderlesestift nach Anspruch 1, **dadurch gekennzeichnet, dass** die für eine Transponderkommunikation erforderliche Sende- und Modulatorstufe sowie die zugehörige Antennenspule als Sender für die Signalübertragung zum Computer dient.

## Claims

1. Touchscreen-sensitive and transponder reading stylus (20) for scanning screens having a hand-piece (21) within which a RF-ID-write/read electronics (26) and optional possible additional components (28) are arranged, and which has a scanning tip (23) and an antenna 25, **characterized in that** the hand-piece (21) is provided with a tip range (22) tapering at least in one direction towards the scanning tip (23) in which the antenna being designed as the coil (25, 29, 37) is provided in such a manner that - when applied with electrical energy - the electromagnetical field originating from the antenna emerges from the tapered end of the tip range (23), and **in that** the hand-piece (21) is designed such that it is at least in the vicinity of the antenna (25, 29, 37) free from any electromagnetical screening or other attenuating means and **in that** the tip range is designed such that it enables a positioning visually exactly to be tracked on the screen.

2. Touchscreen-sensitive and transponder reading stylus as claimed in claim 1, **characterized in that** a ferromagnetic core focusing the electromagnetic radiation effect is associated to the electric coil (25, 29, 37).

3. Touchscreen-sensitive and transponder reading stylus as claimed in claim 2, **characterized in that** the ferromagnetic core (30) is designed rod-shaped and is wrapped by the coil (25), whereby the tip range (23) is designed from all sides centrally tapering towards the scanning tip which is rounded.

4. Touchscreen-sensitive and transponder reading stylus as claimed in claim 2, **characterized in that** the ferromagnetic core (31) is of U-shape and the coil (29) is wrapped around the core range which connects the two legs, whereby the tip range (32) is designed on both sides in one dimension conically tapering and the scanning end is provided with a slant.

5. Touchscreen-sensitive and transponder reading stylus as claimed in claim 2, **characterized in that** the ferromagnetic core is designed as a coil containing pot-core (34), into which the coil (29) is inserted, whereby the tip range is designed acentrically tapering and is provided with a slant (33) at the scanning end.

6. Touchscreen-sensitive and transponder reading stylus as claimed in claim 4 or 5, **characterized in that** the slant is limited by a closed curve which in the range of its smallest radius of curvature is of rounded design.

7. Touchscreen-sensitive and transponder reading stylus as claimed in one of the preceding claims, **characterized in that** the antenna is fixed in the tip range by means of a hardened sealing compound (40) which is electromagnetically low attenuating.

8. Touchscreen-sensitive and transponder reading stylus as claimed in one of the preceding claims, **characterized in that** the touch face formed by the scanning tip adapted for use as a touchscreen-sensitive stylus is smaller than 1 mm².

9. Touchscreen-sensitive and transponder reading stylus as claimed in claim 2, **characterized in that** a light sensor (42) is additionally provided within the hand-piece.

10. Touchscreen-sensitive and transponder reading stylus as claimed in claim 1 and 9, **characterized in that** a light conductor is passed from the scanning end through the RF-ID-antenna embodied as a coil to a light sensor in the hand-piece.

11. Touchscreen-sensitive and transponder reading stylus as claimed in claim 9, **characterized in that** the light sensor is arranged at the scanning tip.

12. Touchscreen-sensitive and transponder reading stylus as claimed in claim 10, **characterized in that** light conductor is passed through the ferro-magnetic core.

13. Touchscreen-sensitive and transponder reading stylus as claimed in claim 9, **characterized in that** the light sensor in the tip range is arranged within the ferro-magnetic core.

14. Touchscreen-sensitive and transponder reading stylus as claimed in claim 7, **characterized in that** the sealing compound is a light conducting medium, which at the interface with the stylus housing has a reflecting layer which directs the light entering at the scanning end to a light sensor arranged upon a light circuit board.

15. Touchscreen-sensitive and transponder reading stylus as claimed in claim 9, **characterized in that** the light sensor is a part of an electronic circuit which additionally comprises a controller for signal connection and control, a Power-On-Rest-input for the controller, a connection of the controller to the light sensor via a demodulator, an input buffer and an output buffer, as well as an RF-ID-emitter and modulator stage.

16. Touchscreen-sensitive and transponder reading stylus as claimed in claim 9, **characterized in that** it interacts with a transponder and a computer, whereby the computer activates the stylus by aid of light signals emitted by touch fields provided upon its screen.

17. Touchscreen-sensitive and transponder reading stylus as claimed in claim 1, **characterized in that** the emitter and modulator stage required for a transponder communication as well as the associated antenna coil are adapted for use as a sender for the signal transfer to the computer.

## Revendications

1. Le stylet pour écran tactile avec lecteur transpondeur intégré (20) destiné à balayer les écrans, comprend une tige permettant de saisir le stylet par la main (21), dans laquelle sont placés un système électronique écritures/lectures (26) RF-ID et, en option, d'autres éléments accessoires (28), et étant pourvue d'une pointe tactile (23) et d'une antenne (25) est **caractérisé en ce que** la tige (21) comprend une zone à proximité de la pointe (22) prenant au moins dans une des directions par rapport à la pointe tactile (23), une forme conique, dans laquelle l'antenne en forme de bobine (25,29, 37) est disposée de manière que - après l'arrivée de courant électrique - le champ électromagnétique ainsi créé puisse émerger à l'extrémité conique de la zone à proximité de la pointe (23) et que la tige du stylet (21) est conçue de manière que - au moins à proximité de l'antenne (25, 29, 37) - il n'existe aucun blindage électromagnétique ni d'autres moyens susceptibles de provoquer une atténuation des champs électromagnétiques, et que la zone à proximité de la pointe est conçue de manière qu'elle permette de suivre visuellement les déplacements et positions précises de la pointe du stylet sur l'écran.

2. Le stylet pour écran tactile avec lecteur transpondeur intégré (20) suivant la revendication 1 est **caractérisé en ce qu'**un noyau ferromagnétique concentrant l'effet d'émergence électromagnétique, est attribué à la bobine (25, 29, 37).

3. Le stylet pour écran tactile avec lecteur transpondeur intégré (20) suivant la revendication 2 est **caractérisé en ce que** le noyau ferromagnétique (30) a la forme d'une barre qui est enroulée par les spires de la bobine (25), et que la zone à proximité de la pointe (23) a une forme conique, arrondie et centrée sur tous les côtés par rapport à la pointe tactile.

4. Le stylet pour écran tactile avec lecteur transpondeur intégré suivant la revendication 2 est **caractérisé en ce que** le noyau ferromagnétique (31) a la forme d'un U et que la bobine (29) enveloppe la zone central située entre les deux branches en U, la zone à proximité de la pointe (32) ayant sur les deux côtés une forme conique unidimensionnelle et que l'extrémité tactile présente un chanfrein.

5. Le stylet pour écran tactile avec lecteur transpondeur intégré suivant la revendication 2 est **caractérisé en ce que** le noyau ferromagnétique est conçu en forme d'un pot (34) dans lequel la bobine (29) est insérée, la zone à proximité de la pointe (32) ayant une forme conique acentrée et que l'extrémité tactile présente un chanfrein (33).

6. Le stylet pour écran tactile avec lecteur transpondeur intégré suivant les revendications 4 ou 5 est **caractérisé en ce que** le chanfrein est limité par une courbe fermée exécutée de manière arrondie dans la zone du rayon la plus petite de sa courbure.

7. Le stylet pour écran tactile avec lecteur transpondeur intégré suivant une des revendications précédentes est **caractérisé en ce que** dans la zone à proximité de la pointe l'antenne est fixée à l'aide d'une masse de scellement durcie (40) et peu atténuant du point de vue électromagnétique.

8. Le stylet pour écran tactile avec lecteur transpondeur intégré suivant une des revendications précédentes est **caractérisé en ce que** la surface de contact due à l'action de la pointe tactile sur l'écran est inférieure à 1 mm² en cas d'utilisation de stylet pour écran tactile.

9. Le stylet pour écran tactile avec lecteur transpondeur intégré suivant la revendication 1 est **caractérisé en ce que** la tige du stylet comprend aussi un capteur de lumière (42).

10. Le stylet pour écran tactile avec lecteur transpondeur intégré suivant les revendications 1 et 9 est **caractérisé en ce qu'**un conducteur de lumière passe depuis l'extrémité tactile à travers l'antenne FR-ID, en forme de bobine, au capteur de lumière disposé dans la tige permettant de saisir le stylet par la main.

11. Le stylet pour écran tactile avec lecteur transpondeur intégré suivant la revendication 9 est **caractérisé en ce que** le capteur de lumière est placé sur la pointe tactile.

12. Le stylet pour écran tactile avec lecteur transpondeur intégré suivant la revendication 9 est **caractérisé en ce que** le conducteur de lumière passe par le noyau ferromagnétique.

13. Le stylet pour écran tactile avec lecteur transpondeur intégré suivant la revendication 9 est **caractérisé en ce que** le capteur de lumière est disposé dans la zone à proximité de la pointe dans le noyau ferromagnétique.

14. Le stylet pour écran tactile avec lecteur transpondeur intégré suivant la revendication 7 est **caractérisé en ce que** la masse de scellage est un fluide conducteur de lumière, sur l'interface de laquelle avec la monture de la tige est appliquée une couche réfléchissante, et que la masse conduit la lumière entrée par l'extrémité tactile vers un capteur de lumière monté sur la plaque de guidage de lumière.

15. Le stylet pour écran tactile avec lecteur transpondeur intégré suivant la revendication 9 est **caractérisé en ce que** le capteur de lumière fait partie d'un circuit électronique comprenant également un élément contrôleur servant à l'enchaînement des signaux, une entrée Power-On-Reset pour le contrôleur, une connexion du contrôleur au capteur de lumière par l'intermédiaire d'un démodulateur, un bloc entrée/sortie ainsi qu'un étage modulateur et émetteur RF-ID.

16. Le stylet pour écran tactile avec lecteur transpondeur intégré suivant la revendication 9 est **caractérisé en ce qu'**il communique avec un transpondeur et un ordinateur qui à l'aide de signaux lumineux émis par les zones tactiles activées de l'écran, sollicite le stylet.

17. Le stylet pour écran tactile avec lecteur transpondeur intégré suivant la revendication 1 est **caractérisé en ce que** l'étage d'émission et de modulation indispensable pour établir la communication par transpondeur ainsi que la bobine d'antenne y affectée font fonction d'émetteur pour la transmission des signaux à l'ordinateur.
